# FASCICULE DE BREVET EUROPEEN

(11) **EP 3 822 530 B1**
(45) Date de publication et mention de la délivrance du brevet: **03.01.2024**
(21) Numéro de dépôt: 20205216.3
(22) Date de dépôt: 02.11.2020
(51) Int. Cl.: F16L 3/10, F16L 3/237, B64C 1/40, H02G 3/04, H02G 3/32, H02G 3/00, F16L 3/06

(54) **AÉRONEF COMPRENANT UN DISPOSITIF DE LIAISON RELIANT UN CÂBLE ÉLECTRIQUE ET UN CONDUIT À UN SUPPORT**
FLUGZEUG MIT MINDESTENS EINER VERBINDUNGSVORRICHTUNG, DIE EIN ELEKTRISCHES KABEL UND EINE LEITUNG AN EINEM TRÄGER VERBINDET
AIRCRAFT COMPRISING AT LEAST ONE CONNECTION DEVICE CONNECTING AN ELECTRICAL CABLE AND A CONDUIT TO A SUPPORT

(30) Priorité: 14.11.2019 FR 1912709
(43) Date de publication de la demande: 19.05.2021
(73) Titulaire: Airbus Operations SAS, 31060 Toulouse (FR)
(72) Inventeur: SEGUY, Fabien, 31060 TOULOUSE (FR); BERGERET, Christian, 31060 TOULOUSE (FR)
(74) Mandataire: Fantin, Laurent

(56) Documents cités:
- WO-A1-2019/097792
- US-A1- 2017 146 154
- US-B1- 7 861 982

## Description

La présente demande se rapporte à un dispositif de liaison d'au moins un câble électrique et d'au moins un conduit à au moins un support ainsi qu'à un aéronef comprenant au moins un tel dispositif de liaison.

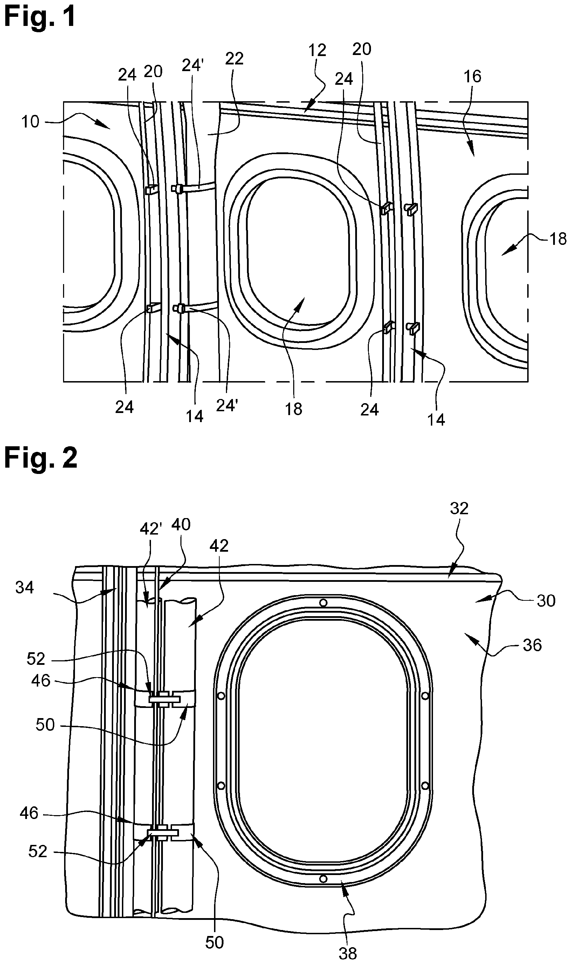

Selon un mode de réalisation illustré sur la figure 1, un fuselage 10 d'aéronef comprend une structure formée de renforts longitudinaux 12, appelés lisses, et de renforts transversaux 14, appelés cadres, ainsi qu'une peau 16 rapportée sur la structure, présentant des hublots 18 positionnés entre les renforts transversaux 14.

L'aéronef comprend des câbles électriques 20 et des conduits d'air 22 cheminant le long des renforts transversaux 14, à proximité de la surface intérieure de la peau 16, entre les hublots 18.

Pour la présente demande de brevet, on entend par câble électrique un unique câble électrique ou plusieurs câbles électriques regroupés et formant un faisceau de câbles électriques.

Chaque câble électrique 20 ou conduit d'air 22 est relié par une pluralité d'éléments de liaison 24, 24' à la structure du fuselage, notamment aux renforts transversaux 12. Ces éléments de liaison 24, 24' sont répartis sur la longueur de chacun des câbles ou des conduits d'air 20, 22. Les câbles électriques 20 devant être écartés des conduits d'air 22 pour limiter les risques d'endommagement de ces derniers en cas d'arc électrique, les câbles électriques 20 sont reliés à la structure de l'aéronef par des éléments de liaison 24 distincts des éléments de liaison 24' prévus pour les conduits d'air 22.

Les câbles électriques et les conduits d'air étant de plus en plus nombreux, il est de plus en plus difficile de les positionner entre deux hublots 18. De plus, la multiplication des éléments de liaison 24, 24' tend à augmenter la masse embarquée et le nombre de trous nécessaires dans la structure pour les fixer.

Le document US7861982 décrit un dispositif de liaison d'un câble électrique et d'un conduit à un support. Ce dispositif comprend un collier de liaison entourant un conduit et le reliant à un support. Le dispositif comprend un premier collier de serrage reliant un câble électrique au collier de liaison ainsi qu'au moins un bouclier, positionné entre le câble et le conduit, configuré pour empêcher une propagation d'un arc électrique en direction du conduit. Ce dispositif n'est pas satisfaisant car aucune protection n'est prévue entre les dispositifs.

Le document US2017/0146154 décrit un dispositif de serrage comprend un moyen de serrage configuré pour recevoir au moins un élément longitudinal, ledit moyen pouvant passer d'une configuration ouverte à une configuration fermée dans laquelle le moyen de serrage maintient l'élément longitudinal. Ce dispositif n'est pas satisfaisant car il ne prévoit aucun bouclier positionné entre un câble électrique et un conduit et configuré pour empêcher une propagation d'un arc électrique en direction du conduit.

Le document WO 2019/097792 décrit un élément de support d'un faisceau de câbles sur un élément de fixation. L'élément de support comprend une base fixée à l'élément de fixation tout en entourant au moins une partie de la périphérie de l'élément de fixation. L'élément de support comprend au moins un élément de support de câble électrique qui peut être fixé en position ajustable à la base autour de l'élément de fixation tout en soutenant au moins une partie de la pluralité de câbles électriques.

La présente invention vise à remédier à tout ou partie des inconvénients de l'art antérieur.

A cet effet, l'invention a pour objet un aéronef comprenant au moins un support, au moins un câble électrique, au moins un conduit ainsi qu'au moins un dispositif de liaison reliant ledit au moins un câble électrique et ledit au moins un conduit audit au moins un support, ledit dispositif de liaison comprenant au moins un collier de liaison entourant ledit au moins un conduit et le reliant au support, le dispositif de liaison comprenant un premier collier de serrage, reliant ledit au moins un câble électrique au collier de liaison, ainsi qu'au moins un bouclier positionné entre le câble électrique et le (ou les) conduit(s) et configuré pour empêcher une propagation d'un arc électrique en direction du (ou des) conduit(s).

Selon l'invention, le dispositif de liaison comprend plusieurs colliers de liaison et au moins un bouclier commun auxdits plusieurs colliers de liaison, ledit bouclier comprenant une gouttière en un matériau isolant, positionnée entre le câble électrique et le collier de liaison, la gouttière présentant une face creuse en contact avec le câble électrique.

Le dispositif de liaison permet de réduire l'encombrement en accolant des câbles électriques et des conduits. Il permet également de pouvoir relier au moins un conduit et au moins un câble électrique au support en un même point, ce qui permet de réduire le nombre d'éléments de liaison et, par conséquent, la masse embarquée ainsi que le nombre de points d'ancrage sur le support.

Selon une autre caractéristique, chaque collier de liaison comprend une base, fixée au support, une première branche présentant une première extrémité reliée à la base et une extrémité libre ainsi qu'une deuxième branche présentant une première extrémité reliée à la base et une extrémité libre, les extrémités libres des première et deuxième branches étant configurées pour occuper un état rapproché dans lequel le collier de liaison maintient le (ou les) conduit(s) et un état écarté dans lequel au moins un conduit peut être inséré à l'intérieur du collier de liaison.

Selon une autre caractéristique, au moins l'une des première et deuxième branches est reliée à la base par une articulation lui permettant de pivoter par rapport à la base.

Selon une autre caractéristique, chacune des première et deuxième branches se présente sous la forme d'une bande de matière, en un matériau rigide, décrivant un profil en C.

Selon une autre caractéristique, le collier de liaison comprend un deuxième collier de serrage pour maintenir les extrémités libres des première et deuxième branches à l'état rapproché, les extrémités libres des première et deuxième branches comprenant respectivement des premier et deuxième trous de passage, le deuxième collier de serrage formant une boucle fermée et passant par les premier et deuxième trous de passage.

Selon une autre caractéristique, le collier de liaison comprend pour chaque câble électrique au moins un couple de premier et deuxième orifices de passage configurés pour permettre le passage du premier collier de serrage.

Selon une autre caractéristique, le collier de liaison comprend au moins un logement configuré pour recevoir au moins un câble électrique, le premier collier de serrage étant configuré pour maintenir le câble électrique dans le logement.

Selon une autre caractéristique, chaque logement comprend des première et deuxième pattes rapportées sur une face extérieure d'une des première et deuxième branches et espacées d'une distance déterminée de manière à ce que le câble électrique soit calé entre les première et deuxième pattes.

D'autres caractéristiques et avantages ressortiront de la description de l'invention qui va suivre, description donnée à titre d'exemple uniquement, en regard des dessins annexés parmi lesquels :
- La figure 1 est une vue d'une partie d'un fuselage d'un aéronef comportant des câbles électriques et un conduit d'air illustrant un mode de réalisation de l'art antérieur,
- La figure 2 est une vue d'une partie d'un fuselage d'un aéronef et d'un dispositif de liaison de câble électrique et de conduit illustrant un mode de réalisation de l'invention,
- La figure 3 est une vue en perspective d'une partie d'un dispositif de liaison de câble électrique et de conduit illustrant un mode de réalisation,
- La figure 4 est une vue en perspective d'un collier de liaison visible sur la figure 3 illustrant un mode de réalisation,
- La figure 5 est une vue en perspective d'un bouclier configuré pour limiter la propagation d'arc électrique illustrant un mode de réalisation, et
- La figure 6 est une vue en perspective d'un collier de liaison illustrant un autre mode de réalisation.

Selon un mode de réalisation visible sur la figure 2, un fuselage 30 d'aéronef comprend une structure constituée de renforts longitudinaux 32, appelés lisses, et de renforts transversaux 34, appelés cadres, ainsi qu'une peau 36 rapportée sur la structure, présentant des hublots 38 positionnés entre les renforts transversaux 34.

L'aéronef comprend au moins un câble électrique 40 et au moins un conduit 42 cheminant le long d'un renfort transversal 34, à proximité de la surface intérieure de la peau 36, entre les hublots 38.

Selon une application, le conduit 42 est configuré pour canaliser de l'air. Bien entendu, l'invention n'est pas limitée à ce fluide.

Selon le mode de réalisation visible sur les figures 2 à 4, deux conduits 42, 42' sont accolés.

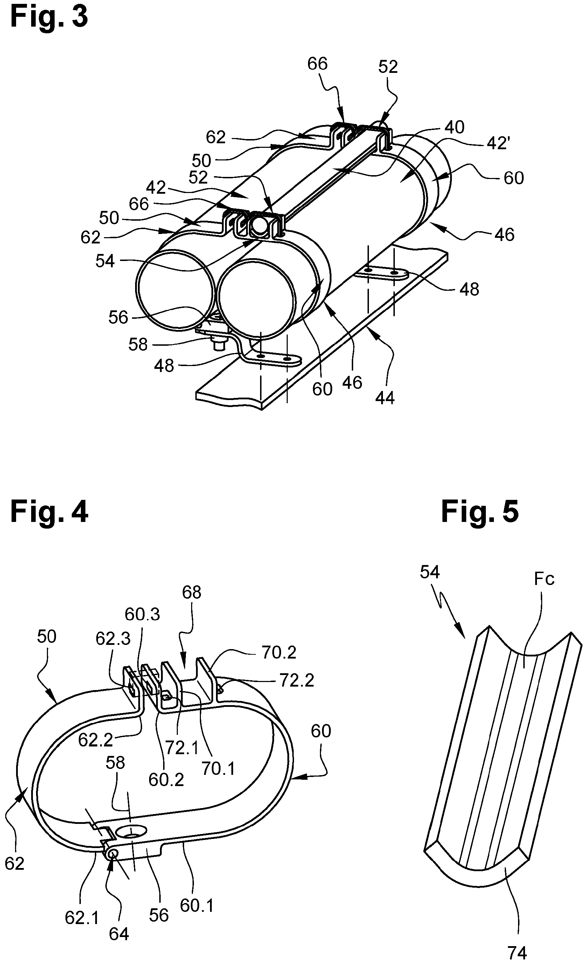

Le câble électrique 40 comprend au moins un tronçon accolé à au moins un tronçon d'un conduit 42, les tronçons de câble électrique 40 et de conduit 42 étant reliés par un dispositif de liaison 46, directement ou indirectement, à au moins un support 44 (visible sur la figure 3) faisant partie de la structure de l'aéronef ou relié à cette dernière. Selon un mode de réalisation visible sur la figure 3, le dispositif de liaison 46 est relié au support 44 par au moins un élément intermédiaire 48, comme une patte par exemple.

Le dispositif de liaison 46 comprend au moins un collier de liaison 50 entourant au moins un conduit 42 et le reliant au support 44 en fonctionnement, un premier collier de serrage 52 configuré pour relier au moins un câble électrique 40 au collier de liaison 50, ainsi qu'au moins un bouclier 54 positionné entre le câble électrique 40 et le (ou les) conduit(s) 42. Généralement, le dispositif de liaison 46 comprend plusieurs colliers de liaison 50 répartis le long des tronçons de câble et de conduit.

Chaque collier de liaison 50 comprend une base 56, fixée en fonctionnement au support 44 ou à l'élément intermédiaire 48 par au moins un élément de fixation 58, comme un boulon par exemple, une première branche 60 qui présente une première extrémité 60.1 reliée à la base 56 et une extrémité libre 60.2 ainsi qu'une deuxième branche 62 qui présente une première extrémité 62.1 reliée à la base 56 et une extrémité libre 62.2.

Selon une configuration, les extrémités libres 60.2, 62.2 des première et deuxième branches 60, 62 sont configurées pour occuper un état rapproché dans lequel le collier de liaison 50 maintient le (ou les) conduit(s) 42 et un état écarté dans lequel au moins un conduit 42 peut être inséré à l'intérieur du collier de liaison 50.

Selon un mode de réalisation, au moins l'une des première et deuxième branches 60, 62 est réalisée en un matériau lui permettant de se déformer entre les états rapproché et écarté.

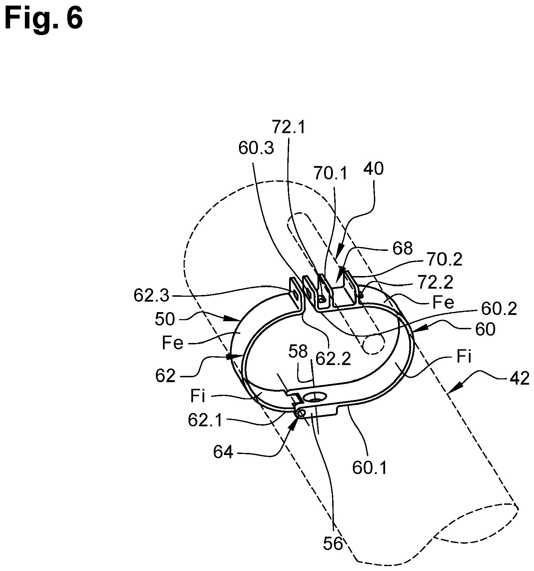

Selon un autre mode de réalisation visible sur les figures 4 et 6, au moins l'une des première et deuxième branches 60, 62 est reliée à la base 56 par une articulation 64, comme un axe de pivotement, permettant à ladite branche 62 de pivoter par rapport à la base 56 afin de permettre à ladite branche 62 de passer de l'état rapproché à l'état écarté ou vice-versa.

Selon un mode de réalisation, chacune des première et deuxième branches 60, 62 se présente sous la forme d'une bande de matière, en un matériau rigide, décrivant un profil en C.

Selon un mode de réalisation, le collier de liaison 50 comprend un deuxième collier de serrage 66 pour maintenir les extrémités libres 60.2 et 62.2 à l'état rapproché.

Selon une configuration, les extrémités libres 60.2, 62.2 des première et deuxième branches 60, 62 comprennent respectivement des premier et deuxième trous de passage 60.3, 62.3, le deuxième collier de serrage 66 formant une boucle fermée et passant par les premier et deuxième trous de passage 60.3, 62.3. Selon un mode de réalisation, l'extrémité libre 60.2 de la première branche 60 présente une extrémité recourbée vers l'extérieur du collier de liaison 50, formant un angle d'environ 90°, au niveau de laquelle est prévu le premier trou de passage 60.3. En parallèle, l'extrémité libre 62.2 de la deuxième branche 62 présente une extrémité recourbée vers l'extérieur du collier de liaison 50, formant un angle d'environ 90°, au niveau de laquelle est prévu le deuxième trou traversant 62.3.

Le collier de liaison 50 est dimensionné en fonction du nombre de conduits 42, 42' à entourer. Selon un mode de réalisation visible sur la figure 4, le collier de liaison 50 est prévu pour deux conduits 42, 42'. Selon un autre mode de réalisation visible sur la figure 6, le collier de liaison 50 est prévu pour un unique conduit 42. Bien entendu, l'invention n'est pas limitée à ces nombres de conduits 42.

Selon un mode de réalisation, le collier de liaison 50 comprend au moins un logement 68, prévu au niveau d'une des première et deuxième branches 60, 62, configuré pour recevoir au moins un câble électrique 40, le premier collier de serrage 52 étant configuré pour maintenir le câble électrique 40 dans le logement 68.

Selon une configuration, le logement 68 est prévu au niveau de la première branche 60 qui est reliée de manière rigide à la base 56, la deuxième branche 62 étant articulée par rapport à la base 56. Ainsi, il est possible de pouvoir monter et démonter le (ou les) conduit(s) 42, 42' tout en conservant le câble électrique 40 relié au support 44 par l'intermédiaire de la première branche 60.

Selon un mode de réalisation, chacune des première et deuxième branches 60, 62 comprend une face intérieure Fi en contact avec un conduit 42 en fonctionnement et une face extérieure Fe opposée à la face intérieure Fi. Chaque logement 68 comprend des première et deuxième pattes 70.1, 70.2 espacées et rapportées sur la face extérieure Fe d'une des première et deuxième branches 60, 62, la première patte 70.1 étant positionnée à proximité de l'extrémité libre 60.2 de la première branche 60, entre l'extrémité libre 60.2 de la première branche 60 et la deuxième patte 70.2.

Les première et deuxième pattes 70.1, 70.2 sont espacées d'une distance déterminée en fonction du diamètre du câble électrique 40 afin que ce dernier soit calé entre les première et deuxième pattes 70.1, 70.2. Ainsi, la distance entre les première et deuxième pattes 70.1, 70.2 est approximativement égale, ou très légèrement supérieure, au diamètre du câble électrique 40.

Le collier de liaison 50 comprend au moins un couple de premier et deuxième orifices de passage 72.1, 72.2 configurés pour permettre le passage du premier collier de serrage 52. En présence d'un logement 68, les premier et deuxième orifices de passage 72.1, 72.2 sont positionnés de part et d'autre des première et deuxième pattes 70.1, 70.2. Ainsi, un premier orifice de passage 72.1 traverse la première branche 60 entre la première patte 70.1 et l'extrémité libre 60.2 de la première branche 60. Un deuxième orifice de passage 72.2 traverse la première branche 60 à proximité de la deuxième patte 70.2, du côté opposé à la première patte 70.1.

Selon un mode de réalisation simplifié, le collier de liaison 50 peut ne comprendre aucun logement 68 mais au moins un couple d'orifices de passage 72.1, 72.2 au niveau d'au moins une des première et deuxième branches pour chaque câble électrique 40, le premier collier de serrage 52 formant une boucle fermée passant à travers les orifices de passage 72.1, 72.2 et entourant le câble électrique 40.

Le collier de liaison 50 peut supporter un ou plusieurs câble(s) électrique(s) 40 et comprendre pour chacun d'eux un premier collier de serrage 52 ainsi qu'au moins un couple d'orifices de passage 72.1, 72.2 configuré pour permettre le passage du premier collier de serrage 52. Pour chaque câble électrique 40, le collier de liaison 50 peut comprendre un logement 68.

Selon un mode de réalisation, les premier et deuxième colliers de serrage 52, 66 sont des colliers souples et autobloquants, commercialisés sous la dénomination « Ty-rap ».

Selon une variante simplifiée, un même collier de serrage pourrait être utilisé pour solidariser le câble électrique 40 et le collier de liaison 50 ainsi que pour maintenir à l'état rapproché les extrémités libres 60.2, 62.2 des première et deuxième branches 60, 62 du collier de liaison 50.

Selon un mode de réalisation, le bouclier 54, positionné entre chaque câble électrique 40 et au moins un conduit 42, est configuré pour empêcher la propagation d'un arc électrique en direction de chaque conduit 42, 42'.

Selon un mode de réalisation visible sur la figure 5, le bouclier 54 comprend au moins une gouttière 74 en un matériau isolant électriquement ou comprenant un revêtement en matériau isolant. Cette gouttière 74 est positionnée entre le câble électrique 40 et le collier de liaison 50, sa face creuse Fc étant en contact avec le câble électrique 40 en fonctionnement. En présence des première et deuxième pattes 70.1, 70.2 formant un logement 68 pour le câble électrique 40, la gouttière 74 est positionnée entre les première et deuxième pattes 70.1, 70.2 ainsi qu'entre la première branche 60 et le câble électrique 40, le premier collier de serrage 52 assurant l'immobilisation du câble électrique 40 et de la gouttière 74.

Le dispositif de liaison 46 comprend au moins un bouclier 54 commun à plusieurs colliers de liaison 50. Selon une configuration, le dispositif de liaison 46 comprend un unique bouclier 54 qui s'étend sur toute, ou quasiment toute, la longueur du tronçon du câble électrique 40 accolé à un conduit 42, 42'.

Le dispositif de liaison 46 permet de réduire l'encombrement en accolant des câbles électriques 40 et des conduits 42.

Il permet également de pouvoir monter ou démonter le câble électrique 40 en conservant le (ou les) conduit(s) relié(s) au support 44 mais aussi de pouvoir monter ou démonter le (ou les) conduit(s) 42 en conservant le câble électrique 40 relié au support 44.

Chaque collier de liaison 50 permet de pouvoir relier au moins un conduit 42 et au moins un câble électrique 40 au support en un même point, ce qui permet de réduire le nombre d'éléments de liaison, et par conséquent la masse embarquée, ainsi que le nombre de points d'ancrage sur le support 44.

## Revendications

1. Aéronef comprenant au moins un support (44), au moins un câble électrique (40), au moins un conduit (42) ainsi qu'au moins un dispositif de liaison reliant ledit au moins un câble électrique (40) et ledit au moins un conduit (42, 42') audit au moins un support (44), ledit dispositif de liaison comprenant au moins un collier de liaison (50) entourant ledit au moins un conduit (42,42') et le reliant au support (44), le dispositif de liaison comprenant un premier collier de serrage (52), reliant ledit au moins un câble électrique (40) au collier de liaison (50), ainsi qu'au moins un bouclier (54), positionné entre le câble électrique (40) et le - ou les - conduit(s) (42), configuré pour empêcher une propagation d'un arc électrique en direction du - ou des - conduit(s) (42, 42'), ledit dispositif de liaison étant **caractérisé en ce qu'**il comprend plusieurs colliers de liaison (50) et au moins un bouclier (54) commun auxdits plusieurs colliers de liaison (50), ledit bouclier (54) comprenant une gouttière (74) en un matériau isolant, positionnée entre le câble électrique (40) et le collier de liaison (50), la gouttière (74) présentant une face creuse (Fc) en contact avec le câble électrique.

2. Aéronef selon la revendication 1, **caractérisé en ce que** chaque collier de liaison (50) comprend une base (56) fixée au support (44), une première branche (60) présentant une première extrémité (60.1) reliée à la base (56) et une extrémité libre (60.2) ainsi qu'une deuxième branche (62) présentant une première extrémité (62.1) reliée à la base (56) et une extrémité libre (62.2), les extrémités libres (60.2, 62.2) des première et deuxième branches (60, 62) étant configurées pour occuper un état rapproché dans lequel le collier de liaison (50) maintient le - ou les - conduit(s) (42, 42') et un état écarté dans lequel au moins un conduit (42) peut être inséré à l'intérieur du collier de liaison (50).

3. Aéronef selon la revendication précédente, **caractérisé en ce qu'**au moins l'une des première et deuxième branches (60, 62) est reliée à la base (56) par une articulation (64) lui permettant de pivoter par rapport à la base (56).

4. Aéronef selon la revendication précédente, **caractérisé en ce que** chacune des première et deuxième branches (60, 62) se présente sous la forme d'une bande de matière, en un matériau rigide, décrivant un profil en C.

5. Aéronef selon l'une des revendications 2 à 4, **caractérisé en ce que** le collier de liaison (50) comprend un deuxième collier de serrage (66) pour maintenir les extrémités libres (60.2, 62.2) des première et deuxième branches (60, 62) à l'état rapproché et **en ce que** les extrémités libres (60.2, 62.2) des première et deuxième branches (60, 62) comprennent respectivement des premier et deuxième trous de passage (60.3, 62.3), le deuxième collier de serrage (66) formant une boucle fermée passant par les premier et deuxième trous de passage (60.3, 62.3).

6. Aéronef selon l'une des revendications précédentes, **caractérisé en ce que** le collier de liaison (50) comprend pour chaque câble électrique (40) au moins un couple de premier et deuxième orifices de passage (72.1, 72.2) configurés pour permettre le passage du premier collier de serrage (52).

7. Aéronef selon l'une des revendications précédentes, **caractérisé en ce que** le collier de liaison (50) comprend au moins un logement (68) configuré pour recevoir au moins un câble électrique (40), le premier collier de serrage (52) étant configuré pour maintenir le câble électrique (40) dans le logement (68).

8. Aéronef selon les revendications 2 et 7, **caractérisé en ce que** chaque logement (68) comprend des première et deuxième pattes (70.1, 70.2) rapportées sur une face extérieure (Fe) d'une des première et deuxième branches (60, 62) et espacées d'une distance déterminée de manière à ce que le câble électrique (40) soit calé entre les première et deuxième pattes (70.1, 70.2).

## Patentansprüche

1. Luftfahrzeug mit wenigstens einem Träger (44), wenigstens einem elektrischen Kabel (40), wenigstens einer Leitung (42) sowie wenigstens einer Verbindungsvorrichtung, die das wenigstens eine elektrische Kabel (40) und die wenigstens eine Leitung (42, 42') mit dem wenigstens einen Träger (44) verbindet, wobei die Verbindungsvorrichtung wenigstens eine Verbindungsschelle (50) aufweist, die die wenigstens eine Leitung (42, 42') umgibt und diese mit dem Träger (44) verbindet, und wobei die Verbindungsvorrichtung eine erste Klemmschelle (52), die das wenigstens eine elektrische Kabel (40) mit der Verbindungsschelle (50) verbindet, sowie wenigstens ein Schild (54) aufweist, das zwischen dem elektrischen Kabel (40) und der - oder den - Leitung(en) (42) angeordnet ist und so eingerichtet ist, dass dieses eine Ausbreitung eines elektrischen Lichtbogens in Richtung der Leitung(en) (42, 42') verhindert, wobei die Verbindungsvorrichtung **dadurch gekennzeichnet ist, dass** diese mehrere Verbindungsschellen (50) und wenigstens ein Schild (54) aufweist, das den mehreren Verbindungsschellen (50) gemeinsam ist, wobei das Schild (54) eine Rinne (74) aus einem isolierenden Material aufweist, die zwischen dem elektrischen Kabel (40) und der Verbindungsschelle (50) angeordnet ist, und wobei die Rinne (74) eine hohle Seite (Fc) aufweist, die mit dem elektrischen Kabel in Kontakt steht.

2. Luftfahrzeug nach Anspruch 1, **dadurch gekennzeichnet, dass** jede Verbindungsschelle (50) eine an der Halterung (44) befestigte Basis (56), einen ersten Schenkel (60) mit einem ersten Ende (60.1), das mit der Basis (56) verbunden ist, und einem freien Ende (60.2), sowie einen zweiten Schenkel (62) mit einem ersten Ende (62.1), das mit der Basis (56) verbunden ist, und mit einem freien Ende (62.2) aufweist, wobei die freien Enden (60.2, 62.2) des ersten und zweiten Schenkels (60, 62) so eingerichtet sind, dass sie einen angenäherten Zustand, in dem die Verbindungsschelle (50) die Leitung(en) (42, 42') hält, und einen entfernten Zustand einnehmen, in dem wenigstens eine Leitung (42) in das Innere der Verbindungsschelle (50) eingeführt werden kann.

3. Luftfahrzeug nach dem vorhergehenden Anspruch,
**dadurch gekennzeichnet, dass** wenigstens einer der ersten und zweiten Schenkel (60, 62) mit der Basis (56) über ein Gelenk (64) verbunden ist, das es ihm ermöglicht, sich in Bezug auf die Basis (56) zu verschwenken.

4. Luftfahrzeug nach dem vorhergehenden Anspruch,
**dadurch gekennzeichnet, dass** jeder der ersten und zweiten Schenkel (60, 62) in Form eines Materialstreifens aus einem steifen Material vorliegt, der ein C-förmiges Profil zeigt.

5. Luftfahrzeug nach einem der Ansprüche 2 bis 4,
**dadurch gekennzeichnet, dass** die Verbindungsschelle (50) eine zweite Klemmschelle (66) aufweist, um die freien Enden (60.2, 62.2) des ersten und zweiten Schenkels (60, 62) im angenäherten Zustand zu halten, und dass die freien Enden (60.2, 62.2) des ersten und zweiten Schenkels (60, 62) jeweils ein erstes und zweites Durchgangsloch (60.3, 62.3) aufweisen, wobei die zweite Klemmschelle (66) eine geschlossene Schleife bildet, die durch das erste und zweite Durchgangsloch (60.3, 62.3) hindurch verläuft.

6. Luftfahrzeug nach einem der vorhergehenden Ansprüche,
**dadurch gekennzeichnet, dass** die Verbindungsschelle (50) für jedes elektrische Kabel (40) wenigstens ein Paar erste und zweite Durchgangsöffnungen (72.1, 72.2) aufweist, die so eingerichtet sind, dass sie den Durchgang der ersten Klemmschelle (52) ermöglichen.

7. Luftfahrzeug nach einem der vorhergehenden Ansprüche,
**dadurch gekennzeichnet, dass** die Verbindungsschelle (50) wenigstens eine Aufnahme (68) aufweist, die so eingerichtet ist, dass sie wenigstens ein elektrisches Kabel (40) aufnimmt, wobei die erste Klemmschelle (52) so eingerichtet ist, dass sie das elektrische Kabel (40) in der Aufnahme (68) hält.

8. Luftfahrzeug nach Anspruch 2 und 7, **dadurch gekennzeichnet, dass** jede Aufnahme (68) eine erste und eine zweite Lasche (70.1, 70.2) aufweist, die an einer Außenfläche (Fe) eines der ersten und zweiten Schenkel (60, 62) angebracht und in einen bestimmten Abstand voneinander beabstandet sind, so dass das elektrische Kabel (40) zwischen der ersten und der zweiten Lasche (70.1, 70.2) gehalten ist.

## Claims

1. Aircraft comprising at least one support (44), at least one electrical cable (40), at least one conduit (42) and at least one connecting device connecting said at least one electrical cable (40) and said at least one conduit (42, 42') to said at least one support (44), said connecting device comprising at least one connecting collar (50) surrounding said at least one conduit (42, 42') and connecting the latter to the support (44), the connecting device comprising a first clamping collar (52), which connects said at least one electrical cable (40) to the connecting collar (50), and at least one shield (54), which is positioned between the electrical cable (40) and the conduit or conduits (42) and is configured to prevent an electrical arc from propagating towards the conduit or conduits (42, 42'), said connecting device being **characterized in that** it comprises a plurality of connecting collars (50) and at least one shield (54) that is common to said plurality of connecting collars (50), said shield (54) comprising a channel (74), which is made of an insulating material and is positioned between the electrical cable (40) and the connecting collar (50), the channel (74) having a concave face (Fc) that is in contact with the electrical cable.

2. Aircraft according to Claim 1, **characterized in that** each connecting collar (50) comprises a base (56) that is fixed to the support (44), a first arm (60), which has a first end (60.1) that is connected to the base (56) and a free end (60.2), and a second arm (62), which has a first end (62.1) that is connected to the base (56) and a free end (62.2), the free ends (60.2, 62.2) of the first and second arms (60, 62) being configured to assume a moved-together state in which the connecting collar (50) holds the conduit or conduits (42, 42'), and a moved-apart state in which at least one conduit (42) can be inserted inside the connecting collar (50).

3. Aircraft according to the preceding claim, **characterized in that** at least one of the first and second arms (60, 62) is connected to the base (56) by way of an articulation (64) that allows said arm to pivot with respect to the base (56).

4. Aircraft according to the preceding claim, **characterized in that** each of the first and second arms (60, 62) takes the form of a strip of material, which is made of a rigid material and describes a C-shaped profile.

5. Aircraft according to one of Claims 2 to 4, **characterized in that** the connecting collar (50) comprises a second clamping collar (66) for holding the free ends (60.2, 62.2) of the first and second arms (60, 62) in the moved-together state, and **in that** the free ends (60.2, 62.2) of the first and second arms (60, 62) comprise first and second through-holes (60.3, 62.3), respectively, the second clamping collar (66) forming a closed loop that passes through the first and second through-holes (60.3, 62.3).

6. Aircraft according to one of the preceding claims, **characterized in that** the connecting collar (50) comprises, for each electrical cable (40), at least one pair of first and second through-orifices (72.1, 72.2), which are configured to allow the first clamping collar (52) to pass through them.

7. Aircraft according to one of the preceding claims, **characterized in that** the connecting collar (50) comprises at least one housing (68), which is configured to accommodate at least one electrical cable (40), the first clamping collar (52) being configured to hold the electrical cable (40) in the housing (68).

8. Aircraft according to Claims 2 and 7, **characterized in that** each housing (68) comprises first and second tabs (70.1, 70.2) that are attached to an outer face (Fe) of one of the first and second arms (60, 62) and are spaced apart by a distance determined in such a manner that the electrical cable (40) is wedged between the first and second tabs (70.1, 70.2).
